(19) 

Europäisches
Patentamt

European
Patent Office

Office européen
des brevets

(11) **EP 4 654 541 A1**

(12) **EUROPEAN PATENT APPLICATION**

(43) Date of publication:
26.11.2025 Bulletin 2025/48

(21) Application number: 25177113.5

(22) Date of filing: **16.05.2025**

(51) International Patent Classification (IPC):
*H04L 41/0806* (2022.01)   *H04L 41/0853* (2022.01)
*H04L 41/0895* (2022.01)   *H04L 41/40* (2022.01)
*H04L 69/32* (2022.01)

(52) Cooperative Patent Classification (CPC):
H04L 41/0806; G06F 9/00; H04L 41/0853;
H04L 41/0895; H04L 41/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.05.2024 FI 20245639**

(71) Applicant: **Nokia Solutions and Networks Oy
02610 Espoo (FI)**

(72) Inventors:
• **LIAO, Qi**
  **85053 Ingolstadt (DE)**
• **BHATTACHARJEE, Parijat**
  **560048 Bangalore (IN)**
• **GAJIC, Borislava**
  **82008 Unterhaching (DE)**

(74) Representative: **Novagraaf Technologies
2 rue Sarah Bernhardt
CS90017
92665 Asnières-sur-Seine Cedex (FR)**

(54) **DEVICES, METHODS, APPARATUSES, AND COMPUTER-READABLE MEDIA FOR
AUTONOMOUS NETWORK**

(57)    Disclosed are devices, methods, apparatuses, and computer-readable media for autonomous networks. An example apparatus for an autonomous network service provider may include at least one processor and at least one memory. The at least one memory may store instructions that, when executed by the at least one processor, may cause the apparatus at least to: receive a first request for a first application; retrieve by metadata retrieval function, first metadata for the first application; and retrieve by module retrieval function, one or more first modules of input, one or more first modules of function and at least one first module of task according to the retrieved first metadata.

FIG. 10

EP 4 654 541 A1

**Description**

TECHNICAL FIELD

Various example embodiments relate to devices, methods, apparatuses, and computer-readable media for autonomous networks (ANs).

BACKGROUND

The sixth generation of mobile communication system (6G) is expected to be an artificial intelligence (AI) native network. The 6G network is envisioned to possess autonomous capabilities, enabling the network to govern itself with minimal to no human intervention. The concept of AN is formalized in, e.g., 3rd Generation Partnership Project Technical Specification (3GPP TS) 128.100 and may be enabled by the following three classes of functions enhanced by the AI/machine learning (ML) technologies: self-organizing networks (SON), management data analysis (MDA), and closed loop signaling link selection (SLS) assurance (COSLA). In practice, the AN service may involve addressing various functions, e.g., different SON use cases such as mobility robustness optimization (MRO) or mobility load balancing (MLB), which typically may necessitate independent training and inference of diverse AI/ML models tailored for specific functions/functionalities. Nevertheless, certain functions exhibit strong interdependency. For instance, some functions may share common input metrics, be influenced by jointly extracted features, and/or optimize shared output control parameters. Training and inferring strongly coupled functions in isolated status may result in elevated sampling and computational expenses, along with substantial memory and storage costs.

SUMMARY

A brief summary of exemplary embodiments is provided below to provide a basic understanding of some aspects of various embodiments. It should be noted that this summary is not intended to identify key features of essential elements or define scopes of the embodiments, and its sole purpose is to introduce some concepts in a simplified form as a preamble for a more detailed description provided below.

In a first aspect, disclosed is a method according to claim 1. The method is performed by an apparatus for an AN service provider. The method may comprise: receiving a first request for a first application; retrieving by metadata retrieval function, first metadata for the first application; and retrieving by module retrieval function, one or more first modules of input, one or more first modules of function, and at least one first module of task according to the retrieved first metadata. The method may comprise additional steps and features as defined by claims 2-15.

In a second aspect, disclosed is an apparatus for an AN service provider. The apparatus comprises means for performing the steps of a method according to the first aspect. The means may include: means for receiving a first request for a first application; means for retrieving by metadata retrieval function, first metadata for the first application; and means for retrieving by module retrieval function, one or more first modules of input, one or more first modules of function and at least one first module of task according to the retrieved first metadata. The means may include at least one processor and at least one memory. The at least one memory may store instructions that, when executed by the at least one processor, may cause the apparatus at least to perform the steps of the method according to the first aspect.

In a third aspect, a computer-readable medium is disclosed. The computer-readable medium may comprise program instructions that, when executed by an apparatus for an AN service provider, may cause the apparatus at least to: receive a first request for a first application; retrieve by metadata retrieval function, first metadata for the first application; and retrieve by module retrieval function, one or more first modules of input, one or more first modules of function and at least one first module of task according to the retrieved first metadata.

Other features and advantages of the example embodiments of the present disclosure will also be apparent from the following description of specific embodiments when read in conjunction with the accompanying drawings, which illustrate, by way of example, the principles of example embodiments of the present disclosure.

BRIEF DESCRIPTION OF THE DRAWINGS

Some example embodiments will now be described, by way of non-limiting examples, with reference to the accompanying drawings.

FIG. 1 shows an exemplary modular framework for AN according to the example embodiments of the present disclosure.
FIG. 2 shows an exemplary module-based graph for MRO function according to the example embodiments of the present disclosure.

FIG. 3 shows an exemplary module-based graph of an AN function according to the example embodiments of the present disclosure.

FIG. 4 shows another exemplary module-based graph of an AN function according to the example embodiments of the present disclosure.

FIG. 5 shows an exemplary sequence diagram for modular AN service according to the example embodiments of the present disclosure.

FIG. 6 shows an exemplary sequence diagram for modular AN service with domain analysis according to the example embodiments of the present disclosure.

FIG. 7A and FIG. 7B show two exemplary interdependent AN functions.

FIG. 8 shows an exemplary cross-function coordination according to the example embodiments of the present disclosure.

FIG. 9 shows an exemplary sequence diagram for multi-function coordination according to the example embodiments of the present disclosure.

FIG. 10 shows a flow chart illustrating an example method 1000 for ANs according to the example embodiments of the present disclosure.

FIG. 11 shows a block diagram illustrating an example device 1100 for ANs according to the example embodiments of the present disclosure.

FIG. 12 shows a block diagram illustrating an example apparatus 1200 for ANs according to the example embodiments of the present disclosure.

Throughout the drawings, same or similar reference numbers indicate same or similar elements. A repetitive description of the same elements would be omitted.

DETAILED DESCRIPTION

Herein below, some example embodiments are described in detail with reference to the accompanying drawings. The following description includes specific details for the purpose of providing a thorough understanding of various concepts. However, it will be apparent to those skilled in the art that these concepts may be practiced without these specific details. In some instances, well-known circuits, techniques and components are shown in block diagram form to avoid obscuring the described concepts and features.

Example embodiments of the present disclosure provide a modular, programmable, and standards-compliant network automation system. The system according to the example embodiments of the present disclosure may facilitate the deployment of multiple interdependent AN functions and foster seamless coordination among the AN functions. The example embodiments of the present disclosure may achieve at least the following three improvements.

Modularity of the AN architecture: AN-related function/application can be designed and organized as a collection of independent and interchangeable modules.

Effective module-based building and orchestration: AN-related function/application can be effectively built and orchestrated to save the learning time and computational model storage cost.

Adaptation and multi-task function building: AN-related multi-task function/application with interdependency can be efficiently adapted and built.

In the example embodiments of the present disclosure, some terminologies are explained as below.

AN function: Network analysis, diagnosis, or optimization functions of an AN, including SON functions, MDA functions, and COSLA functions, e.g., the MRO function in SON. These functions can be deployed as near real-time (RT) radio access network (RAN) intelligent controller (RIC) applications (xApps) or non-RT RIC applications (rApps) in an open radio access network (O-RAN) architecture. In the example embodiments of the present disclosure, "AN function" and "AN application (app)" can be used interchangeably.

Task: Objective or use case of an AN function, e.g., the use cases MRO and MLB as two specific tasks for SON.

Modules: Independent components to compose an AN function. A module may be an object file that contains code, AI/ML model, or partial AI/ML model of an AN solution. In the example embodiments of the present disclosure, "module" and "kernel" can be used interchangeably.

Domain: It is possible to customize different models for different network environments, different network systems and/or different radio technologies for a same task. The domain can be used to differentiate the models for the same task. The domain may have a domain tag, e.g., geographical tag such as "urban", "suburban", "rural", or e.g., radio technology tag such as "4G", "5G", "6G", etc. A domain analysis function can be implemented to classify network systems/environments and assign the class to the network of an AN consumer and also infer the domain tag for the AN consumer.

Routing: a path to connect the selected modules to build an AN app.

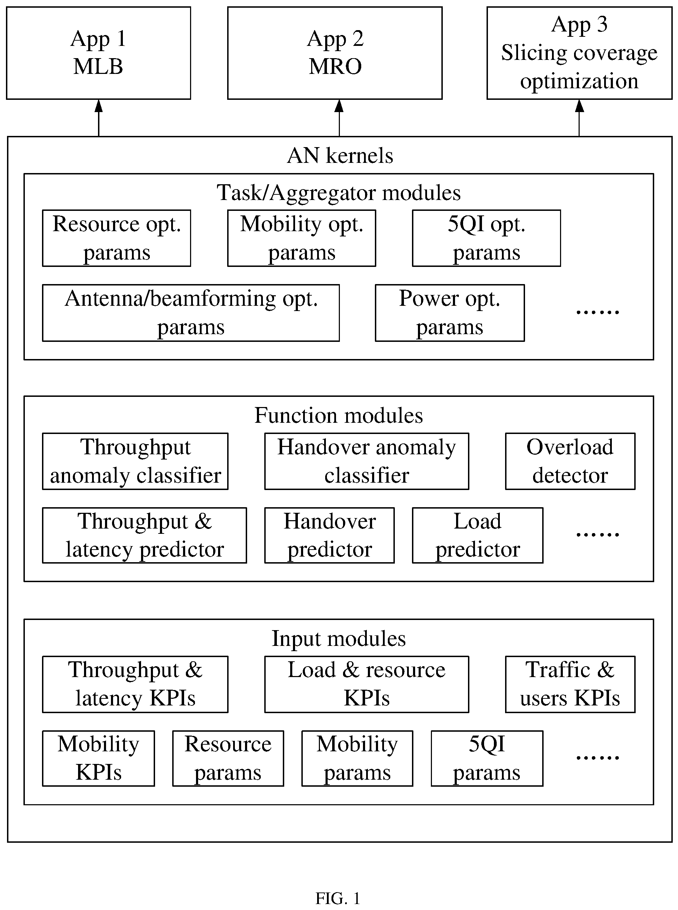

FIG. 1 shows an exemplary modular framework for AN according to the example embodiments of the present disclosure. Referring to FIG. 1, three SON functions, app 1 MLB, app 2 MRO, and app 3 slicing coverage optimization, are shown as examples of AN apps. The examples AN apps can be built from a collection of independent AN kernels.

As is shown in FIG. 1, in some embodiments, the modules are classified into three classes: input modules, function modules, and task/aggregator modules.

The input modules may refer to input data, and in some embodiments, the input data may include post-processed data and may also be referred to as modules of input. In some embodiments, the input modules can be a deep neural network (DNN) using collected raw data directly as the input layer. Alternatively, in some embodiments, the input modules can utilize preprocessed data aggregated over various time scales or extracted features to represent diverse statistical properties. For instance, an app executes over the data aggregated at 15-minute intervals, and another app executes over the data aggregated over one hour. Such features can be incorporated as a single input layer or as multiple layers within the DNN, or computed with classical statistical algorithms. For instance, the set of input modules can be a collection $\mathcal{I} := \{I_0, I_1, ..., I_N\}$, where each module $I_n$, for $n = 1, 2, ..., N$ is a DNN itself, or a collection of the transferrable layers of the DNN to be assembled with other modules.

In FIG. 1, throughput and latency key performance indicators (KPIs), load and resource KPIs, traffic and users KPIs, mobility KPIs, resource parameters (params), mobility parameters, the fifth generation of mobile communication system (5G) quality of service (QoS) identifier (5QI) parameters, etc. are shown as examples of the input modules. Alternatively or additionally, in some embodiments, the input modules can be the DNNs extracting low-level features from the above-mentioned KPIs, respectively. Alternatively or additionally, in some embodiments, the input modules can also be preprocessing algorithms taking the above-mentioned KPIs as the inputs, respectively.

The function modules may refer to micro-functions for higher-level feature extraction, network anomaly detection, network root cause analysis, network state classification, and prediction and may also be referred to as modules of function. In some embodiments, the micro-functions can be AI/ML models for classification, e.g., binary class for anomaly detection or multi-class, regression, or prediction, and in some embodiments, the AI/ML models may include both the classical AI/ML models and the deep learning models. For example, the functions modules can be a collection $\mathcal{F} := \{F_0, F_1, ..., F_K\}$ where each module $F_k$ for $k = 1, 2, ..., K$ may be a DNN as regressor or classifier to provide interested detected anomalies or detected metrics.

In FIG. 1, throughput anomaly classifier, handover anomaly classifier, overload detector, throughput and latency predictor, handover predictor, load predictor, etc. are shown as examples of the function modules.

The task/aggregator modules may refer to adaptation, e.g., optimization decision on network parameters and may also be referred to as task modules or modules of task. In some embodiments, the task/aggregator modules may aggregate the outputs of the function modules and compute the adapted, e.g., optimized network parameters. In some embodiments, the aggregating performed by the task/aggregator modules can sum up the outputs of the function modules. Alternatively or additionally, in some embodiments, the aggregating performed by the task/aggregator modules can be a computation function such as DNN, using the outputs of the function modules as the inputs. The task/aggregator modules may perform the computations by using either classical AI/ML algorithms or the DNN. Each module provides the adaptation, e.g., optimization decision on a distinct subset of the network parameters. For instance, the task/aggregator modules can be a collection $\mathcal{T} := \{T_0, T_1, ..., T_M\}$ where each module $T_m$ for $m = 1, 2, ..., M$ is a single layer or multiple layers of the DNNs, with the last layer as the activation layer to provide the adapted, e.g., optimized values of the network parameters.

In FIG. 1, resource option (opt.) parameters, mobility option parameters, 5QI option parameters, antenna/-beamforming option parameters, etc., are shown as examples of the outputs of the task/aggregator modules.

According to the example embodiments of the present disclosure, an AN service provider can build an AN app subscribed by an AN consumer with graph-based routing, and the routing across multiple modules provides a guidance of compiling an app. In some embodiments, the AN service provider can build the AN app by retrieving the modules that compose the subscribed AN app and compiling the app based on routing information of module-based graph.

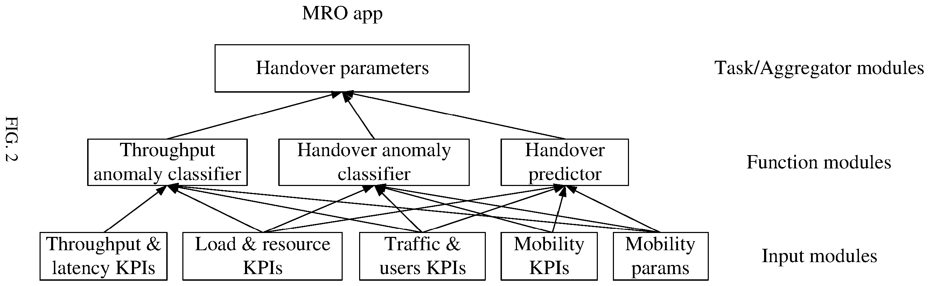

Taking the app 2 MRO as an example, FIG. 2 shows an exemplary module-based graph for MRO function according to the example embodiments of the present disclosure. The MRO is a SON use case. Referring to FIG. 2, the nodes of the graph are the modules, and directional edges may indicate the connection/calling between the modules, and thus the module-based graph may include the information on compiling the MRO app. Various subsets of the input modules may contribute outputs to distinct function modules, and the task/aggregator module collects the outputs of the function modules to compute the adaptation decision.

According to the example embodiments of the present disclosure, app metadata may store routing and graph information, and in some embodiments, the app metadata can also include domain-related information of other app and/or consumer, such as a brief app description and domain tag.

In some embodiments, the app metadata may store a task description and a module-based graph and optionally store a domain tag.

The task description may provide information on the application's task, e.g. a SON use case.

The domain tag may provide a label of the model, which may be composition of modules, customized for a specific class of the network system/environment/radio technology. For the same task, the model trained on different environments may result in different compositions of the modules, e.g., Environments A and B may have different aggregator modules. The domain tag can be encoded message, such as index, strings, binary code, categorical embedding, etc. For example, Tianlun Hu, Qi Liao, Qiang Liu, Georg Carle, "Network Slicing via Transfer Learning aided Distributed Deep Reinforcement Learning", IEEE GLOBECOM, 2022 may provide solutions of the domain analysis function which can be used for inferring the domain tag.

The module-based graph may define the directional connections among the selected modules to compile an app. In some embodiments, the module-based graph may include a list of the nodes and a list of the edges. In some embodiments, different data structures can be used to store the graph information, e.g., using an adjacency list or an adjacency matrix. In some embodiments, different graph traversal structures can be utilized when retrieving the graph and building the app, such as depth-first search (DFS) and breath-first search (BFS). In some embodiments, the connections between the modules can be embedded in the nodes, e.g., the input, function, and task modules, such that by routing across the modules, the solutions according to the example embodiments of the present disclosure can automatically compile the apps/application programming interfaces (APIs) without human intervention.

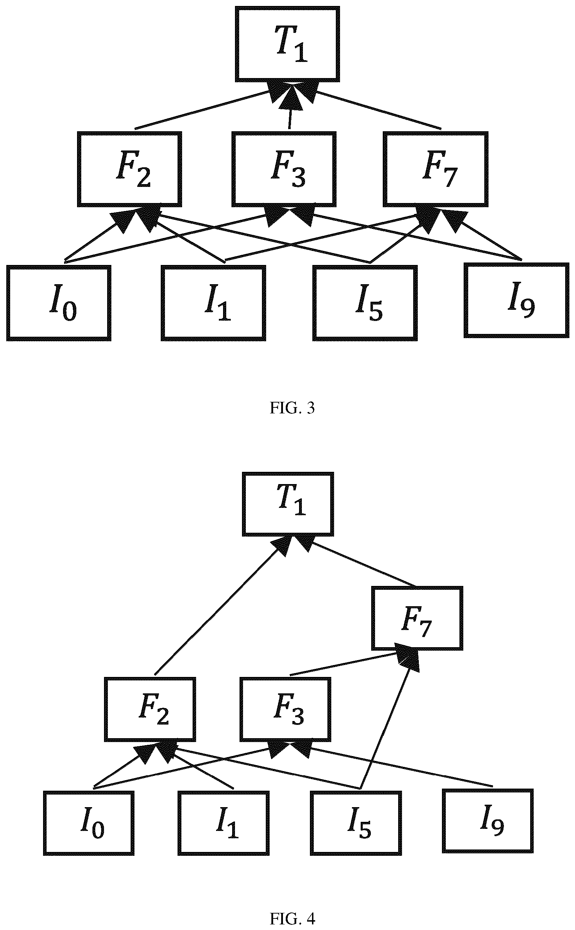

FIG. 3 shows an exemplary module-based graph of an AN function according to the example embodiments of the present disclosure. For the AN app shown in FIG. 3, the app metadata can include the following information:

```
{"task description": "mobility robustness optimization",
"domain tag": "urban",
"nodes": [I0, I1, I5, I9, F2, F3, F7, T1],
"edges":
[(I0, F2), (I0, F3), (I1, F2), (I1, F7), (I5, F2),
(I5, F7), (I9, F3), (I9, F7), (F2, T1), (F3, T1), (F7, T1)],
... }
```

In some embodiments, the app metadata can include additional optional information such as the time granularity of the data fed into the input modules. In some embodiments, the app metadata can also include information and hyperparameters linked to the triggering mechanism of function execution, e.g., whether it's periodic, reactive, or proactive, which criterion and the corresponding thresholds.

In some embodiments, the composition of modules can be organized into more tiers. For instance, the outputs of certain function modules can serve as inputs for other function modules.

FIG. 4 shows another exemplary module-based graph of an AN function according to the example embodiments of the present disclosure. Referring to FIG. 4, the inputs of function module $F_7$ include a concatenation of the input module $I_5$ and the output layer of function module $F_3$.

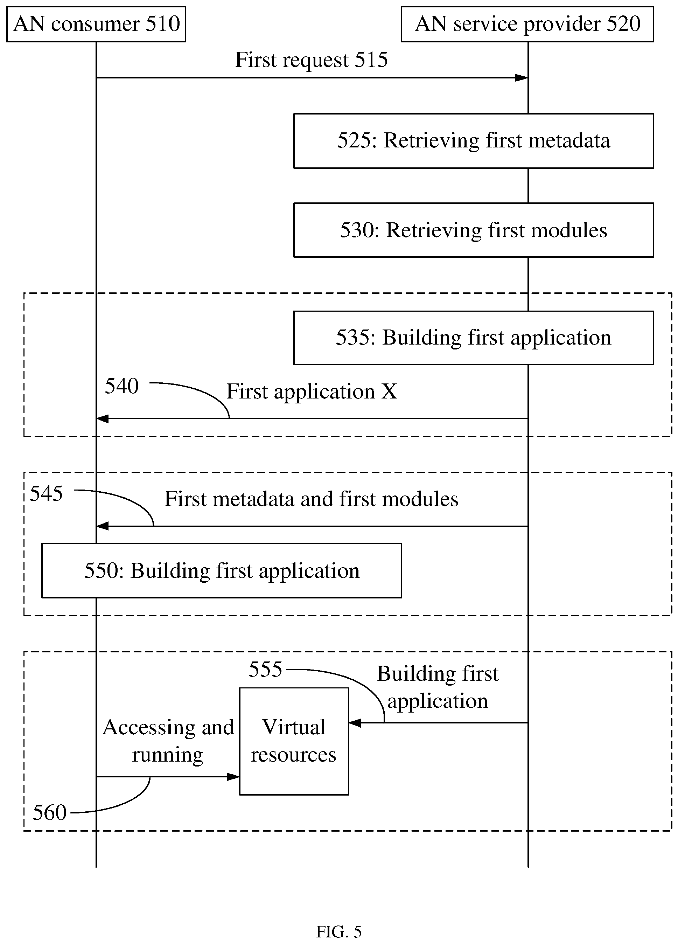

FIG. 5 shows an exemplary sequence diagram for modular AN service according to the example embodiments of the present disclosure. Referring to FIG. 5, an AN consumer 510 may represent any AN consumer in an AN, e.g. an operator, and an AN service provider 520 may represent any AN service provider serving the AN consumer 510.

The AN consumer 510 may transmit to the AN service provider 520 a first request 515 for requesting a first application X, e.g., SON function such as MRO. The first request 515 can include the name of app X if the AN consumer 510 is aware of the name. Alternatively, if the exact name is unknown, the AN consumer 510 can provide a brief description or a list of keywords outlining the required function.

It is assumed that in the example embodiments associated with FIG. 5, the first application X does not involve a domain or involves only one domain, so the AN service provider 520 does not perform domain analysis.

Receiving the first request 515, in an operation 525, the AN service provider 520 may retrieve by metadata retrieval function, the first metadata for the first application X. In case the first request 515 lacks the app's name but includes a description or a list of keywords, in the operation 525, the metadata retrieval function can conduct a search within attributes like "task description" in the metadata to find a matched metadata for the first application X and retrieve the matched metadata.

In some embodiments, the first metadata may comprise at least one of the following: a task description, a domain tag, or a module-based graph comprising the first modules as nodes and directional edges indicating connection between the first modules.

Then in an operation 530, the AN service provider 520 may retrieve by module retrieval function, one or more first modules of input, one or more first modules of function, and at least one first module of task according to the retrieved first metadata, e.g., based on the list of nodes in the metadata.

In some embodiments, in the operation 530, the AN service provider 520 may retrieve by the module retrieval function the first metadata, the first modules of input, the first modules of function and the first module of task from corresponding databases. In some embodiments, the corresponding databases may be local databases of the AN service provider 520. For example, the module retrieval function may retrieve the first metadata from an application metadata database, retrieve the first input modules from an input module database, retrieve the first function modules from a function module database, and retrieve the first task module from a task module database.

The example embodiments of the present disclosure may work within a multi-vendor environment. The system of the databases, e.g., the input module database, the function module database, the task/aggregator module database can be deployed at different AN service providers, and thus can be accessed by means of multi-vendor interfaces. For example, one AN service provider may retrieve input or function modules from another AN service provider, e.g., in some cases, from corresponding databases of the another AN service provider. In such a case the interfaces towards the databases need to be standardized, for example, the format or request/response to/from database may be standardized in order to enable multi-vendor integration.

In some embodiments, in the operation 530, the AN service provider 520 may retrieve by the module retrieval function, at least one of the first metadata, the first modules of input, the first modules of function, and the first module of task from another AN service provider. In some embodiments, in the operation 530, the AN service provider 520 may retrieve the at least one from the another AN service provider in at least one case of the following: the at least one retrieved from the another AN service provider outperforms the corresponding one retrieved from a local database, or the one corresponding to the at least one retrieved from the another AN service provider is absent in the local database.

For example, in some embodiments, in terms of performance such as explainability, bias, energy consumption, in some embodiments, if metadata and/or a module from the another AN service provider can provide performance better than that from the local database, the AN service provider 520 may retrieve the metadata and/or the module from the another AN service provider. In some embodiments, if metadata and/or a module is absent in the local database, the AN service provider 520 may retrieve the metadata and/or the module from the another AN service provider. In some embodiments, if the performance provided by metadata and/or a module from a local database cannot meet the required criteria, the metadata and/or the module can be deemed to be absent in the local database, and the AN service provider 520 may retrieve the metadata and/or the module from the another AN service provider.

Then, in some embodiments, the AN service provider 520 may build at a server of the AN service provider 520, the first application X based on the first metadata and the first modules. Then, in an operation 540, the AN service provider 520 may transmit to the AN consumer 510 for the AN consumer 510 to download the first application X.

Alternatively, in some embodiments, in an operation 545, the AN service provider 520 may transmit to the AN consumer 510, the first metadata and the first modules for the AN consumer 510 in an operation 550 to build the first application X.

Alternatively, in some embodiments, the AN service provider 520 may utilize a cloud service architecture. In an operation 555, the AN service provider 520 may build the first application X within virtual resources, such as virtual machines, based on the first metadata and the first modules, and in an operation 560 the AN consumer 510 may access the virtual resources and run the first application X within the virtual resources.

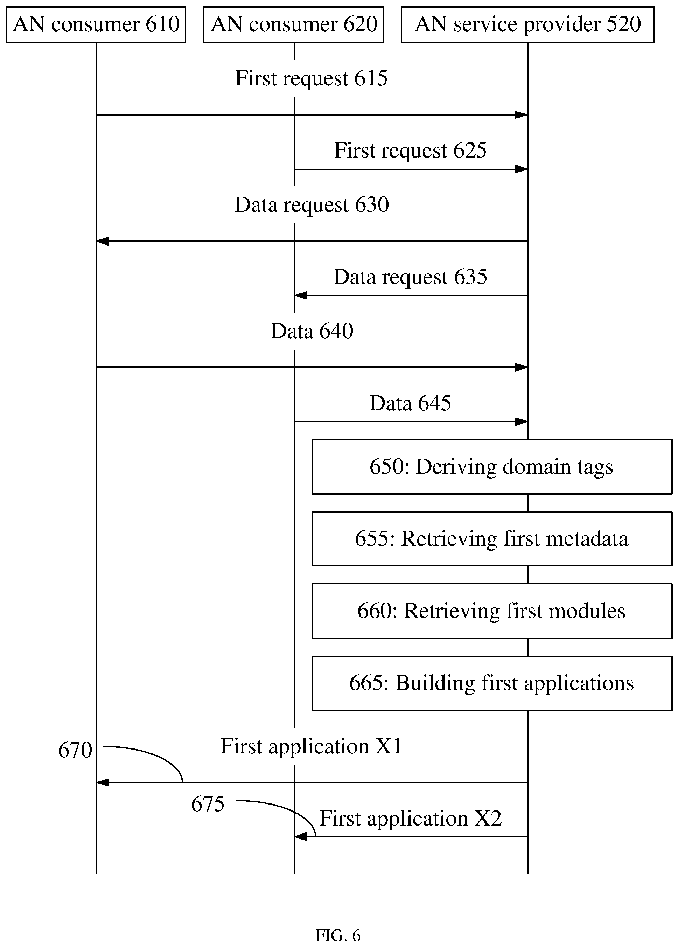

FIG. 6 shows an exemplary sequence diagram for modular AN service with domain analysis according to the example embodiments of the present disclosure. Referring to FIG. 6, an AN consumer 610 and an AN consumer 620 may represent any AN consumer requesting from the AN service provider 520 applications for the same task with different domains.

The AN consumer 610 may transmit to the AN service provider 520 a first request 615 for the first application X for the task of, e.g., the MRO, and the AN consumer 620 may transmit to the AN service provider 520 a first request 625 for the first application X for the task of, e.g., also the MRO. It is assumed that in the example embodiments associated with FIG. 6, the first application X involves different domains, and in this case, the AN service provider 520 may perform domain analysis.

To perform the domain analysis, the AN service provider 520 may transmit data request 630 to the AN consumer 610 and data request 635 to the AN consumer 620 in order to collect data samples for domain analysis. Receiving the data 640 from the AN consumer 610 and data 645 from the AN consumer 620, in an operation 650, the AN service provider 520 may derive by domain analysis function, the domain tag for the first request 615 and the domain tag for the first request 625.

Assuming that both the AN consumer 610 and the AN consumer 620 request the first application X for the task of e.g. the MRO, it is possible that the AN consumer 610 and the AN consumer 620 belong to two distinct network environments/systems/radio technologies. In this case, in the operation 650, the AN service provider 520 may derive different domain tags for the AN consumer 610 and the AN consumer 620, for example, the domain tag for the AN consumer 610 may be "urban" and the domain tag for the AN consumer 620 may be "suburban".

Then, in an operation 655, the AN service provider 520 may retrieve the first metadata comprising the derived domain tag. For example, the retrieved first metadata for the AN consumer 610 may comprise the module-based graph shown in FIG. 3, and the retrieved first metadata for the AN consumer 620 may include the following information:

```
{"task description": "mobility robustness optimization",
 "domain tag": "suburban",
 "nodes": [I0, I1, I5, I9, F2, F3, F7, T2],
 "edges":
```

```
[(I0, F2), (I0, F3), (I1, F2), (I1, F7), (I5, F2), (I5, F7),
(I9, F3), (I5, F7), (F2, T2), (F3, T2), (F7, T2)],
 ... }
```

Then, in an operation 660, the AN service provider 520 may retrieve the first modules of input, the first modules of function, and the first module of task according to the first metadata for the AN consumer 610 and the AN consumer 620, respectively.

In this example, the input and function modules for the AN consumer 610 and the AN consumer 620 are the same and reusable, and the difference, due to the different domain tags, lies in the task modules, where $T_2$ could be a finetuned version of $T_1$, or vice versa.

Those skilled in the art may understand that in the example embodiments associated with FIG. 6, similar to the example embodiments associated with FIG. 5, the AN service provider 520 may retrieve the metadata and/or the module(s) from a local database or from another AN service provider.

Then, in an operation 665, the AN service provider 520 may build, for the AN consumer 610, the first application X, labeled as X1, based on the first metadata and the first modules retrieved for the AN consumer 610, and build, for the AN consumer 620, the first application X, labeled as X2, based on the first metadata and the first modules retrieved for the AN consumer 620.

Then, in an operation 670, the AN service provider 520 may transmit the first application X1 to the AN consumer 610, and in an operation 675, the AN service provider 520 may transmit the first application X2 to the AN consumer 620.

Those skilled in the art may understand that in the example embodiments associated with FIG. 6, similar to the example embodiments associated with FIG. 5, the AN service provider 520 may alternatively provide the metadata and the modules to the AN consumer 610 or the AN consumer 620 for the AN consumer 610 or the AN consumer 620 to build to the first application X1 or the first application X2, alternatively, the AN service provider 520 may provide the first application X1 or the first application X2 by utilizing the cloud service architecture/virtual resources.

The solutions according to the example embodiments of the present disclosure are not only efficient in terms of fast, automated, low-memory compiling, but also more efficient during the operation. When computing the inference, the reused kernel for different APIs only needs to be computed once, which may significantly reduce the number of flops in operation.

The example embodiments of the present disclosure can be implemented in MRO use case as a solution provided to SON. For example, a modular deep learning method for the MRO function may be used in a SON product. The MRO function may be composed based on the module-based graph shown in FIG. 2. The input modules can include throughput and latency-related KPIs (e.g., user average uplink and downlink throughput and latency), load and allocated resource-related KPIs (e.g., uplink and downlink physical resource block utilization), traffic and user-related KPIs (e.g., number connected users, uplink and downlink traffic volume), handover-related KPIs, i.e., mobility KPIs (e.g., too-early and too-late handover ratio, ping-pong handover ratio, handover attempt success ratio, and handover rate), and currently executed handover parameters, i.e., mobility parameters (e.g., cell individual offset, time to trigger). Then, based on the values of the input modules, the function modules compute desired metrics which will influence the final decision of the network optimization parameters. For instance, the throughput anomaly classifier may identify the level of anomaly of the throughput increase or decrease; the handover anomaly classifier may identify the level of anomaly of the handover performance; and the handover predictor may predict the handover KPIs. Then, the task/aggregator module(s) may aggregate the outputs of the function modules and compute the optimized handover parameters such as cell individual offset (CIO) or time-to-trigger (TTT).

The function modules may involve different types. For example, the handover predictor may be a type of regression module. The regression module is to predict the handover cost, which may be defined as a weighted sum of too-late and too-early handover-related metrics. For example, the handover anomaly classifier may be a type of multi-classification module. The purpose of the multi-classification module is to predict quantified levels of change in handover performance, categorized as, e.g., "improve," "minor influence," and "degrade." For example, the throughput anomaly classifier may be a type of binary classification module. The binary classification module is for predicting anomalies in QoS metrics, encompassing throughput and latency.

The function modules can be implemented as either DNNs or classical ML models, such as decision trees or support vector machines. The adaptation of the handover parameters, e.g. MRO, may be computed based on both the prediction and classification modules. The built MRO function exhibits robustness in skewed data distribution and enhanced accuracy in optimization decisions.

Robustness in skewed data distribution: Particularly beneficial in scenarios with skewed data distributions, as commonly encountered in MRO, the trained classification function demonstrates increased robustness compared to the regression function.

Enhanced accuracy in optimization decisions: Given that handover metrics typically involve extremely small values (e.g., too-early or too-late handover ratios often below 0.02), minor errors in predicted handover KPIs can lead to incorrect optimization decisions. Adopting a coarse granularity in the outputs, such as classification or anomaly detection results, provides more accurate information to aid in optimization decision-making.

The task/aggregator module is flexible and can be formulated either as DNNs or classical machine learning algorithms. In the solution for SON product, a straightforward heuristic-based policy may be adopted, which calculates optimal handover parameters by using the outputs of the three function modules. In the MRO use case, the heuristic aggregator demonstrates comparable performance to the DNN-based aggregator, without the necessity for training and with faster inference computation.

The solutions according to the example embodiments of the present disclosure can efficiently upgrade the API by reusing the unchanged modules and without recompiling all the modules. When the API needs to be upgraded to a new version, e.g., by modifying, replacing, adding, or deleting some modules, the solutions according to the example embodiments of the present disclosure can simply update the graph information in the metadata and update the modules, e.g., with the updated or new modules, such that only the changed and added modules need to be compiled and connected to the existing routing of the graph, while the unchanged modules remain the same and do not need to be recompiled. So, in some embodiments, the AN service provider 520 may update the first application X by updating the first modules to update the first metadata.

The example embodiments of the present disclosure can also deal with the case where numerous AN functions are interdependent, for example, multiple functions share the same subset of the input parameters, multiple functions share the same subset of the output control parameters, and/or at times, the multiple functions may generate conflicting decisions if operating independently.

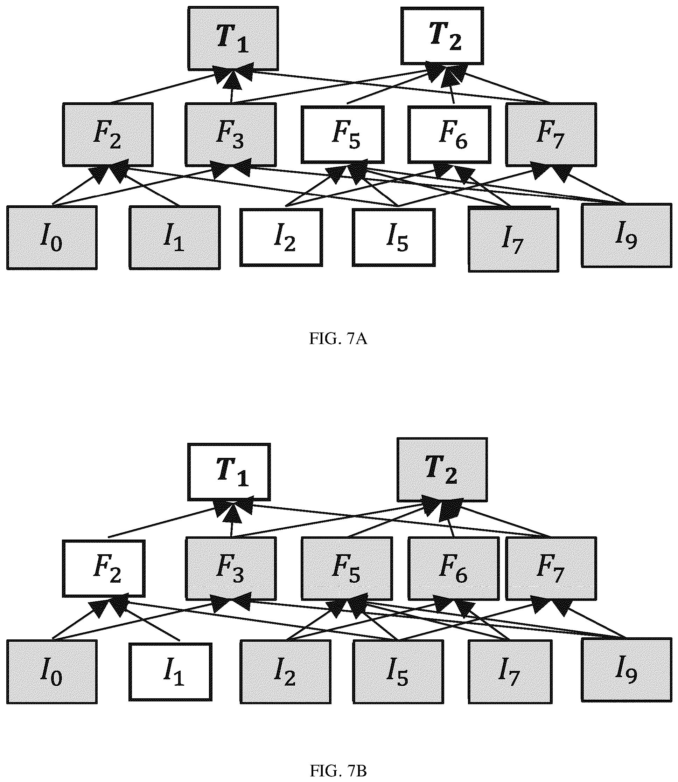

FIG. 7A and FIG. 7B show two exemplary interdependent AN functions, where the shaded modules are the activated ones included in the routing graph for the corresponding application. Cross-function coordination according to the example embodiments of the present disclosure may achieve stable and robust network optimization. A coordination mechanism according to the example embodiments of the present disclosure may merge the module compositions across multiple AN functions, and additionally, a lightweight adapter may be incorporated to fine-tune the combined apps.

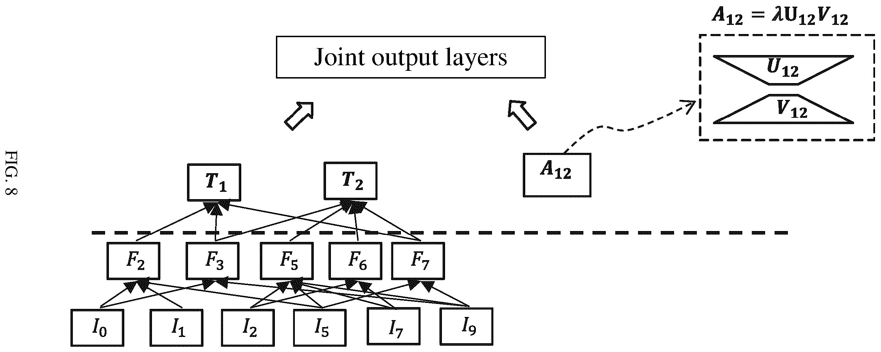

FIG. 8 shows an exemplary cross-function coordination according to the example embodiments of the present disclosure. As is shown in FIG. 8, the composed modules for the two tasks, $T_1$ and $T_2$ shown in FIG. 7A and FIG. 7B can be combined and fine-tuned with an efficient adapter, denoted as $A_{12}$. The adapter $A_{12}$ can be added at the concatenated layers of tasks/aggregators $T_1$ and $T_2$, by utilizing, for instance, element-wise addition. Subsequently, one or more layers can be stacked on top of the $T_1$, $T_2$ and $A_{12}$ to serve as joint output layers, providing coordinated optimized network parameters for both tasks $T_1$ and $T_2$.

According to the example embodiments of the present disclosure, most modules can be reused, and a lightweight adapter and a few new output layers are added to the reusable modules, which can significantly enhance model training and inference efficiency while minimizing memory cost.

In the example embodiments of the present disclosure, a parameter-efficient adapter with lower complexity and less memory cost, a low-rank adapter and/or a sparse adapter can be used.

As shown in FIG. 8, one possible efficient solution is to decompose the adapter parameters $\mathbf{A}_{12} \in \mathbb{R}^{o \times i}$ as the adapter to coordinate $T_1$ and $T_2$ into low-rank matrices $\mathbf{A}_{12} = \lambda \mathbf{U}_{12} \mathbf{V}_{12}$, where $\mathbf{U}_{12} \in \mathbb{R}^{o \times k}$ and $\mathbf{V}_{12} \in \mathbb{R}^{k \times i}$, where i is the input dimensionality, o is the output dimensionality, $k << i$, $o$ is the rank of the matrix, $\mathbb{R}^{o \times i}$ is the set of real matrices with dimension o $\times$ i, $\mathbb{R}^{o \times k}$ is the set of real matrices with dimension $o \times k$, $\mathbb{R}^{k \times i}$ is the set of real matrices with dimension $k \times i$, and $\lambda$ is a scaling hyper-parameter and in some embodiments $\lambda = 1$, if the weights in $\mathbf{A}_{12}$ is small enough. The joint output layers can be one or multiple layers of DNNs stacked on top of the task module(s) with the adapter(s), to finetune the outputs of the task module(s).

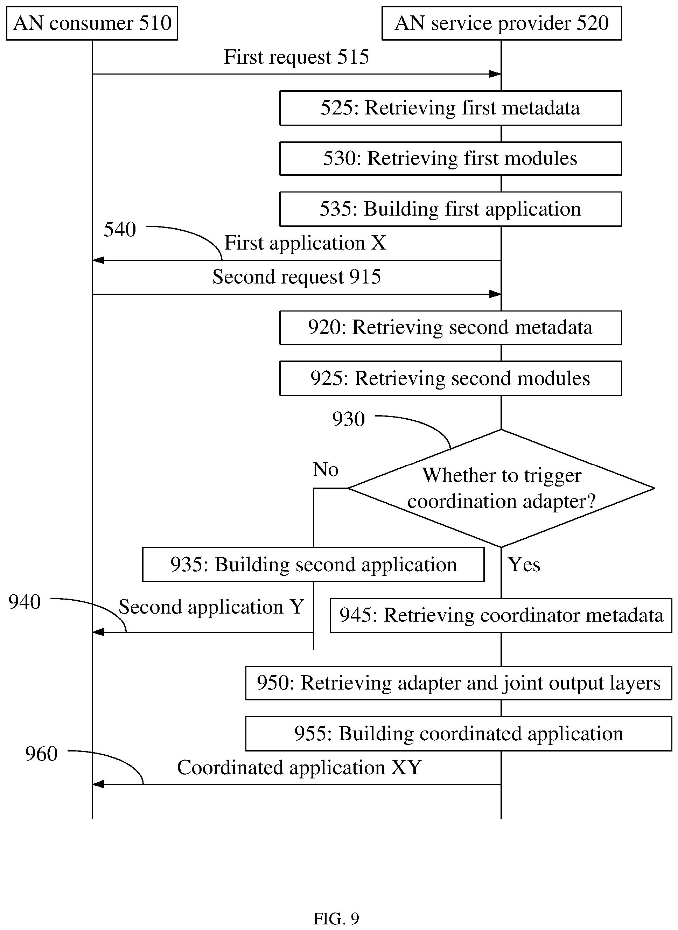

FIG. 9 shows an exemplary sequence diagram for multi-function coordination according to the example embodiments of the present disclosure. Referring to FIG. 9, the operations from the AN consumer 510 transmitting the first request 515 to the AN service provider 520 transmitting the first application X have been described with respect to FIG. 5. Those skilled in the art may understand that the first application X may involve or not involve the domain analysis.

The AN consumer 510 subscribes to the service for another AN function, second application Y, and transmits a second request 915 for the second application Y to the AN service provider 520.

Receiving the second request 915, with or without the domain analysis for the second application Y, in an operation 920, the AN service provider 520 may retrieve by the metadata retrieval function, second metadata for the second application Y, and in an operation 925, the AN service provider 520 may retrieve by the module retrieval function, one or more second modules of input, one or more second modules of function and at least one second module of task according to the retrieved second metadata.

The operation 920 and the operation 925 may be similar to the operation 525 and the operation 530, respectively.

In some embodiments, the AN service provider 520 may retrieve the second metadata, the second modules of input, the second modules of function, and the second module of task from corresponding databases. In some embodiments, the AN service provider 520 may retrieve at least one of the second metadata, the second modules of input, the second modules of function, and the second module of task from another AN service provider, in case the at least one retrieved from the another AN service provider outperforms the corresponding one retrieved from a local database, and/or the one corresponding to the at least one retrieved from the another AN service provider is absent in the local database.

Then, in an operation 930, the AN service provider 520 may determine by coordination trigger function, whether to trigger a coordination adapter based on detecting coordination between the first application X and the second application Y. In some embodiments, the coordination trigger function may detect interactions between the metadata of app X and app Y and decide whether to trigger the deployment of coordination adapter. In some embodiments, the coordinator trigger function may identify the need to perform the coordination between different applications, e.g., the first application X and the second application Y, based on, for example, detection of common modules in the metadata of different applications and/or detection of the same domain tag in the metadata of different applications, e.g., indicating the same geographical area.

In case of determining not to trigger the coordination adapter ("No" prong of the operation 930), the AN service provider 520 may build the second application based on the second metadata and the second modules, which means since the first application X and the second application Y are independent, the tasks for the first application X and the second application Y can be executed sequentially or in parallel.

Alternatively, in case of determining to trigger the coordination adapter ("Yes" prong of the operation 930), in an operation 945, the AN service provider 520 may retrieve by coordinator metadata retrieval function, coordinator metadata for the coordination.

In some embodiments, the coordinator metadata may comprise at least one of the following: a coordinator description, a domain tag, an adapter, or joint output layers.

The coordinator metadata may define the cross-function adapters, which may include the information about the description of the coordinator, the domain tag if any, and labels of the adapter and the joint output layers.

For instance, the coordinator metadata may be as below.

```
{"coordinator description": "coordinator for MRO and MLB",
"domain tag": "urban",
"adapter": [A12]
"joint output layers": [O12],
  ... }
where the label A12 and O12 denote the adapter and the joint output layers for AN function 1
and AN function 2.
```

Then, in an operation 950, the AN service provider 520 may retrieve by adapter retrieval function, the adapter, and the joint output layers according to the retrieved coordinator metadata.

An example list of adapters and joint output layers may be as below, and the adapter retrieval function may retrieve the adapter and the joint output layers from such a list.

Assuming a list of AN functions $\mathcal{F} := \{1, 2, 3, ... \}$, the list of the adapters and joint output layers for the cross-function coordination may be denoted as:

$[A_{12}, O_{12}, A_{13}, O_{13}, A_{123}, O_{123}, ... ]$, where $A_{ij}$ and $Oi_j$ denotes the adapter and joint output layers for function i and j. It is also possible to coordinate more than two functions, e.g., $A_{ijl}$ and $O_{ijl}$ which denote the adapter and joint output layers for function $i$, $j$ and $l$.

In some embodiments, the AN service provider 520 may retrieve the coordinator metadata, the adapter, and the joint output layers from corresponding databases. In some embodiments, the AN service provider 520 may retrieve at least one of the coordinator metadata, the adapter, and the joint output layers from another AN service provider, in case the at least one retrieved from the another AN service provider outperforms the corresponding one retrieved from a local database, and/or the one corresponding to the at least one retrieved from the another AN service provider is absent in the local database.

Then, in an operation 955, the AN service provider 520 may build a coordinated application, labeled as XY, by merging the first modules and the second modules, composing the merged modules with the adapter, and stacking the composed modules and adapter with the joint output layers. Then, in an operation 960, the AN service provider 520 may transmit the coordinated application XY to the AN consumer 510.

In some embodiments, the AN service provider 520 may build the second application Y and/or the coordinated application XY at a server of the AN service provider 520. In some embodiments, the AN service provider 520 may provide the metadata and the second modules for the second application Y or the first and second modules, the adapter, and the joint output layers for the coordinated application XY to the AN consumer 510 for the AN consumer 510 to build to the second application Y or the coordinated application XY. In some embodiments, the AN service provider 520 may provide the second application Y or the coordinated application XY by utilizing the cloud service architecture/virtual resources.

The example embodiments of the present disclosure provide the adapters in a dynamic close loop compiling process for multi-API coordination. Thus, when updating the coordination behavior, only the adapters and/or joint output layers need to be retrained/finetuned, and the APIs and the modules may remain independent and do not need to be updated. So, in some embodiments, the AN service provider 520 may update the coordinated application by updating the adapter and/or joint output layer. Such an efficient coordinator update process may improve the efficiency and modularity of the inter-API coordination process.

Those skilled in the art may understand that, similar to the example embodiments associated with FIG. 5 and FIG. 6, the coordination mechanism in the example embodiments associated with FIG. 9 can be also applied to the multi-consumer scenario.

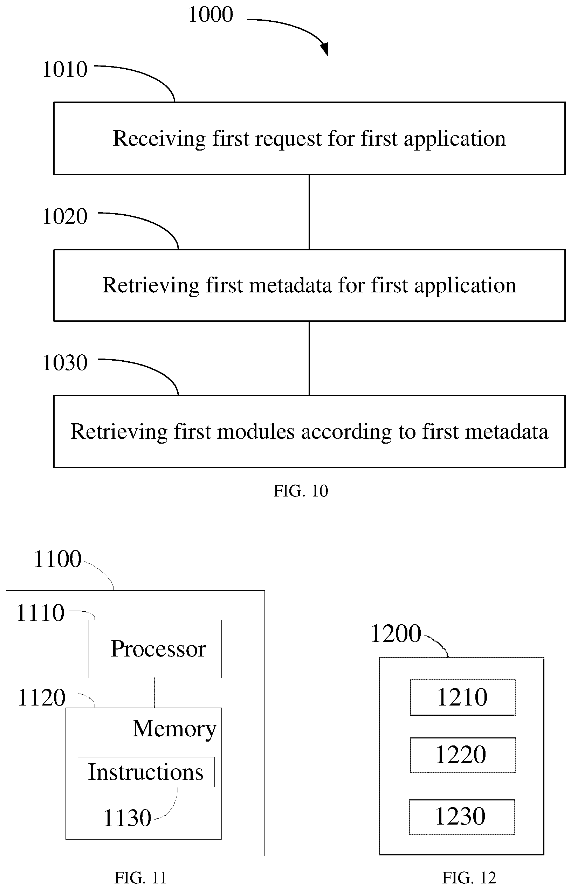

FIG. 10 shows a flow chart illustrating an example method 1000 for ANs according to the example embodiments of the present disclosure. The example method 1000 may be performed, for example, by an apparatus for an AN service provider, such as the AN service provider 520 above mentioned.

Referring to FIG. 10, the example method 1000 may comprise: an operation 1010 of receiving a first request for a first application; an operation 1020 of retrieving by metadata retrieval function, first metadata for the first application; and an operation 1030 of retrieving by module retrieval function, one or more first modules of input, one or more first modules of function and at least one first module of task according to the retrieved first metadata.

In some embodiments, the example method 1000 may comprise: building at a server of the AN service provider, the first application based on the first metadata, and the first modules.

In some embodiments, the example method 1000 may comprise: transmitting to an AN consumer requesting the first application, the first metadata, and the first modules for the AN consumer to build the first application.

In some embodiments, the example method 1000 may comprise: building within virtual resources, the first application based on the first metadata and the first modules, for an AN consumer requesting the first application to access the virtual resources and run the first application within the virtual resources.

In some embodiments, the example method 1000 may comprise: deriving by domain analysis function, a domain tag for the first request, in case the first application involves different domains; and retrieving the first metadata comprising the derived domain tag.

In some embodiments, the first metadata may comprise at least one of the following: a task description, a domain tag, or a module-based graph comprising the first modules as nodes and directional edges indicating connection between the first modules.

In some embodiments, the example method 1000 may comprise: retrieving the first metadata, the first modules of input, the first modules of function, and the first module of task from corresponding databases.

In some embodiments, the example method 1000 may comprise: retrieving at least one of the first metadata, the first modules of input, the first modules of function, and the first module of task from another AN service provider.

In some embodiments, the example method 1000 may comprise: retrieving the at least one from the another AN service provider in at least one case of the following: the at least one retrieved from the another AN service provider outperforms the corresponding one retrieved from a local database, or the one corresponding to the at least one retrieved from the another AN service provider is absent in the local database.

In some embodiments, the example method 1000 may comprise: updating the first application by updating the first modules.

In some embodiments, the example method 1000 may comprise: receiving a second request for a second application; retrieving by the metadata retrieval function, second metadata for the second application; retrieving by the module retrieval function, one or more second modules of input, one or more second modules of function and at least one second module of task according to the retrieved second metadata; and determining by coordination trigger function, whether to trigger a coordination adapter based on detecting coordination between the first application and the second application.

In some embodiments, the example method 1000 may comprise: in case of determining not to trigger the coordination adapter, building the second application based on the second metadata and the second modules.

In some embodiments, the example method 1000 may comprise: in case of determining to trigger the coordination adapter, retrieving by coordinator metadata retrieval function, coordinator metadata for the coordination, retrieving by adapter retrieval function, an adapter and joint output layers according to the retrieved coordinator metadata, and building a coordinated application by merging the first modules and the second modules, composing the merged modules with the adapter, and stacking the composed modules and adapter with the joint output layers.

In some embodiments, the coordinator metadata may comprise at least one of the following: a coordinator description, a domain tag, the adapter, or the joint output layers.

In some embodiments, the example method 1000 may comprise: updating the coordinated application by updating at least one of the following: the adapter or the joint output layers.

FIG. 11 shows a block diagram illustrating an example device 1100 for ANs according to the example embodiments of the present disclosure. The device, for example, may be at least part of an apparatus for an AN service provider, such as the AN service provider 520 in the above examples.

As shown in FIG. 11, the example device 1100 may include at least one processor 1110 and at least one memory 1120 that may store instructions 1130. The instructions 1130, when executed by the at least one processor 1110, may cause the device 1100 at least to perform the example method 1000 described above.

In various example embodiments, the at least one processor 1110 in the example device 1100 may include, but is not limited to, at least one hardware processor, including at least one microprocessor such as a central processing unit (CPU), a portion of at least one hardware processor, and any other suitable dedicated processor such as those developed based on for example Field Programmable Gate Array (FPGA) and Application Specific Integrated Circuit (ASIC). Further, the at least one processor 1110 may also include at least one other circuitry or element not shown in FIG. 11.

In various example embodiments, the at least one memory 1120 in the example device 1100 may include at least one storage medium in various forms, such as a transitory memory and/or a non-transitory memory. The transitory memory may include, but is not limited to, for example, a random-access memory (RAM), a cache, and so on. The non-transitory memory may include, but is not limited to, for example, a read-only memory (ROM), a hard disk, a flash memory, and so on. The term "non-transitory," as used herein, is a limitation of the medium itself (i.e., tangible, not a signal) as opposed to a limitation on data storage persistency (e.g., RAM vs. ROM). Further, the at least memory 1120 may include, but is not limited to, an electric, a magnetic, an optical, an electromagnetic, an infrared, or a semiconductor system, apparatus, or device or any combination of the above.

Further, in various example embodiments, the example device 1100 may also include at least one other circuitry, element, and interface, for example at least one I/O interface, at least one antenna element, and the like.

In various example embodiments, the circuitries, parts, elements, and interfaces in the example device 1100, including the at least one processor 1110 and the at least one memory 1120, may be coupled together via any suitable connections including, but is not limited to, buses, crossbars, wiring and/or wireless lines, in any suitable ways, for example electrically, magnetically, optically, electromagnetically, and the like.

It is understood that the structure of the device on the side of the AN service provider 520 is not limited to the above example device 1100.

FIG. 12 shows a block diagram illustrating an example apparatus 1200 for ANs according to the example embodiments of the present disclosure. The apparatus, for example, may be at least part of an AN service provider, such as the AN service provider 520 in the above examples.

As shown in FIG. 12, the example apparatus 1200 may comprise: means 1210 for receiving a first request for a first application; means 1220 for retrieving by metadata retrieval function, first metadata for the first application; and means 1230 for retrieving by module retrieval function, one or more first modules of input, one or more first modules of function and at least one first module of task according to the retrieved first metadata.

In some embodiments, the apparatus 1200 may comprise means for building at a server of the AN service provider, the first application based on the first metadata and the first modules.

In some embodiments, the apparatus 1200 may comprise means for transmitting to an AN consumer requesting the first application, the first metadata, and the first modules for the AN consumer to build the first application.

In some embodiments, the apparatus 1200 may comprise means for building within virtual resources, the first application based on the first metadata and the first modules, for an AN consumer requesting the first application to access the virtual resources and run the first application within the virtual resources.

In some embodiments, the apparatus 1200 may comprise: means for deriving by domain analysis function, a domain tag for the first request, in case the first application involves different domains; and means for retrieving the first metadata comprising the derived domain tag.

In some embodiments, the first metadata may comprise at least one of the following: a task description, a domain tag, or a module-based graph comprising the first modules as nodes and directional edges indicating connection between the first modules.

In some embodiments, the apparatus 1200 may comprise means for retrieving the first metadata, the first modules of input, the first modules of function, and the first module of task from corresponding databases.

In some embodiments, the apparatus 1200 may comprise means for retrieving at least one of the first metadata, the first modules of input, the first modules of function, and the first module of task from another AN service provider.

In some embodiments, the apparatus 1200 may comprise means for retrieving the at least one from the another AN service provider in at least one case of the following: the at least one retrieved from the another AN service provider outperforms the corresponding one retrieved from a local database, or the one corresponding to the at least one retrieved from the another AN service provider is absent in the local database.

In some embodiments, the apparatus 1200 may comprise means for updating the first application by updating the first modules.

In some embodiments, the apparatus 1200 may comprise: means for receiving a second request for a second application; means for retrieving by the metadata retrieval function, second metadata for the second application; means for retrieving by the module retrieval function, one or more second modules of input, one or more second modules of function and at least one second module of task according to the retrieved second metadata; and means for determining by coordination trigger function, whether to trigger a coordination adapter based on detecting coordination between the first application and the second application.

In some embodiments, the apparatus 1200 may comprise means for in case of determining not to trigger the coordination adapter, building the second application based on the second metadata and the second modules.

In some embodiments, the apparatus 1200 may comprise means for: in case of determining to trigger the coordination adapter, retrieving by coordinator metadata retrieval function, coordinator metadata for the coordination, retrieving by adapter retrieval function, an adapter, and joint output layers according to the retrieved coordinator metadata, and building a coordinated application by merging the first modules and the second modules, composing the merged modules with the adapter, and stacking the composed modules and adapter with the joint output layers.

In some embodiments, the coordinator metadata may comprise at least one of the following: a coordinator description, a domain tag, the adapter, or the joint output layers.

In some embodiments, the apparatus 1200 may comprise means for updating the coordinated application by updating at least one of the following: the adapter or the joint output layers.

In some example embodiments, examples of means in the example apparatus 1200 may include circuitries. For example, an example of means 1210 may include a circuitry configured to perform the operation 1010 of the example method 1000, an example of means 1220 may include a circuitry configured to perform the operation 1020 of the example method 1000, and an example of means 1230 may include a circuitry configured to perform the operation 1030 of the example method 1000.

The example apparatus 1200 may further include means comprising circuitry configured to perform the example method 1000. In some example embodiments, examples of means may also include software modules and any other suitable function entities.

The example embodiments of the present disclosure also provide a computer-readable medium comprising program instructions that, when executed by an apparatus for an AN service provider, such as the AN service provider 520 in the above examples, may cause the apparatus at least to: receive a first request for a first application; retrieve by metadata retrieval function, first metadata for the first application; and retrieve by module retrieval function, one or more first modules of input, one or more first modules of function and at least one first module of task according to the retrieved first metadata.

In some embodiments, the computer-readable medium may include instructions that, when executed by the apparatus, may cause the apparatus to: build at a server of the AN service provider, the first application based on the first metadata, and the first modules.

In some embodiments, the computer-readable medium may include instructions that, when executed by the apparatus, may cause the apparatus to: transmit to an AN consumer requesting the first application, the first metadata, and the first modules for the AN consumer to build the first application.

In some embodiments, the computer-readable medium may include instructions that, when executed by the apparatus, may cause the apparatus to: build within virtual resources, the first application based on the first metadata and the first modules, for an AN consumer requesting the first application to access the virtual resources and run the first application within the virtual resources.

In some embodiments, the computer-readable medium may include instructions that, when executed by the apparatus, may cause the apparatus to: derive by domain analysis function, a domain tag for the first request, in case the first application involves different domains; and retrieve the first metadata comprising the derived domain tag.

In some embodiments, the first metadata may comprise at least one of the following: a task description, a domain tag, or a module-based graph comprising the first modules as nodes and directional edges indicating connection between the first modules.

In some embodiments, the computer-readable medium may include instructions that, when executed by the apparatus, may cause the apparatus to: retrieve the first metadata, the first modules of input, the first modules of function, and the first module of task from corresponding databases.

In some embodiments, the computer-readable medium may include instructions that, when executed by the apparatus, may cause the apparatus to: retrieve at least one of the first metadata, the first modules of input, the first modules of function, and the first module of task from another AN service provider.

In some embodiments, the computer-readable medium may include instructions that, when executed by the apparatus, may cause the apparatus to: retrieve the at least one from the another AN service provider in at least one case of the following: the at least one retrieved from the another AN service provider outperforms corresponding one retrieved from a local database, or the one corresponding to the at least one retrieved from the another AN service provider is absent in the local database.

In some embodiments, the computer-readable medium may include instructions that, when executed by the apparatus, may cause the apparatus to: update the first application by updating the first modules.

In some embodiments, the computer-readable medium may include instructions that, when executed by the apparatus, may cause the apparatus to: receive a second request for a second application; retrieve by the metadata retrieval function, second metadata for the second application; retrieve by the module retrieval function, one or more second modules of input, one or more second modules of function and at least one second module of task according to the retrieved second metadata; and determine by coordination trigger function, whether to trigger a coordination adapter based on detecting coordination between the first application and the second application.

In some embodiments, the computer-readable medium may include instructions that, when executed by the apparatus, may cause the apparatus to: in case of determining not to trigger the coordination adapter, build the second application based on the second metadata and the second modules.

In some embodiments, the computer-readable medium may include instructions that, when executed by the apparatus, may cause the apparatus to: in case of determining to trigger the coordination adapter, retrieve by coordinator metadata retrieval function, coordinator metadata for the coordination, retrieve by adapter retrieval function, an adapter, and joint output layers according to the retrieved coordinator metadata, and build a coordinated application by merging the first modules and the second modules, composing the merged modules with the adapter, and stacking the composed modules and adapter with the joint output layers.

In some embodiments, the coordinator metadata may comprise at least one of the following: a coordinator description, a domain tag, the adapter, or the joint output layers.

In some embodiments, the computer-readable medium may include instructions that, when executed by the apparatus, may cause the apparatus to: update the coordinated application by updating at least one of the following: the adapter or the joint output layers.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but is not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the above description, the terms "terminal device", "communication device", "terminal", "user equipment" and "UE" may be used interchangeably.

The term "circuitry" throughout this disclosure may refer to one or more or all of the following: (a) hardware-only circuit implementations (such as implementations in only analog and/or digital circuitry); (b) combinations of hardware circuits and software, such as (as applicable) (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to one or all uses of this term in this disclosure, including in any claims. As a further example, as used in this disclosure, the term circuitry also covers an implementation of merely a hardware circuit or processor (or multiple processors) or portion of a hardware circuit or processor and its (or their) accompanying software and/or firmware. The term circuitry also covers, for example and if applicable to the claim element, a baseband integrated circuit or processor integrated circuit for a mobile device or a similar integrated circuit in server, a cellular network device, or other computing or network device.

Another example embodiment may relate to computer program codes or instructions which may cause an apparatus to perform at least the respective methods described above. Another example embodiment may be related to a computer-readable medium having such computer program codes or instructions stored thereon. In some embodiments, such a computer-readable medium may include at least one storage medium in various forms such as a volatile memory and/or a non-volatile memory. The volatile memory may include, but is not limited to, for example, a RAM, a cache, and so on. The non-volatile memory may include, but is not limited to, a ROM, a hard disk, a flash memory, and so on. The non-volatile memory may also include, but is not limited to, an electric, a magnetic, an optical, an electromagnetic, an infrared, or a semiconductor system, apparatus, or device or any combination of the above.

Unless the context clearly requires otherwise, throughout the description and the claims, the words "comprise," "comprising," and the like are to be construed in an inclusive sense, as opposed to an exclusive or exhaustive sense; that is to say, in the sense of "including, but is not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the description using the singular or plural number may also include the plural or singular number respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding, with or without author input or prompting, whether these features, elements and/or states are included or are to be performed in any particular embodiment.

As used herein, the term "determine/determining" (and grammatical variants thereof) can include, not least: calculating, computing, processing, deriving, measuring, investigating, looking up (for example, looking up in a table, a database or another data structure), ascertaining and the like. Also, "determining" can include receiving (for example, receiving information), accessing (for example, accessing data in a memory), obtaining and the like. Also, "determine/-determining" can include resolving, selecting, choosing, establishing, and the like.

While some embodiments have been described, these embodiments have been presented by way of example, and are not intended to limit the scope of the disclosure. Indeed, the apparatus, methods, and systems described herein may be embodied in a variety of other forms; furthermore, various omissions, substitutions, and changes in the form of the methods and systems described herein may be made without departing from the spirit of the disclosure. For example, while blocks are presented in a given arrangement, alternative embodiments may perform similar functionalities with different components and/or circuit topologies, and some blocks may be deleted, moved, added, subdivided, combined, and/or modified. At least one of these blocks may be implemented in a variety of different ways. The order of these blocks may also be changed. Any suitable combination of the elements and actions of the some embodiments described above can be combined to provide further embodiments. The accompanying claims and their equivalents are intended to cover such forms or modifications as would fall within the scope and spirit of the disclosure.

Abbreviations used in the description and/or in the figures are defined as follows:

| | |
|---|---|
| 3GPP TS | 3rd Generation Partnership Project Technical Specification |
| 4G | fourth generation of mobile communication system |
| 5G | fifth generation of mobile communication system |
| 6G | sixth generation of mobile communication system |
| AI | artificial intelligence |
| AN | autonomous network |
| API | application programming interface |
| BFS | breath-first search |
| CIO | cell individual offset |
| DFS | depth-first search |
| DNN | deep neural network |
| IEEE | Institute of Electrical and Electronics Engineers |
| GLOBECOM | Global Communications Conference |
| KPI | key performance indicator |
| LoRA | low-rank adaptation |
| MDA | management data analysis |
| ML | machine learning |
| MLB | mobility load balancing |
| MRO | mobility robustness optimization |
| O-RAN | open radio access network |
| QoS | quality of service |
| 5QI | 5G QoS identifier |
| RAN | radio access network |

RIC         RAN intelligent controller
RT          real-time
SLS         signaling link selection
COSLA       closed loop SLS assurance
SON         self-organizing networks
TTT         time-to-trigger

**Claims**

1. A method performed by an apparatus for an autonomous network, AN, service provider, comprising:

   receiving a first request for a first application;
   retrieving by metadata retrieval function, first metadata for the first application; and
   retrieving by module retrieval function, one or more first modules of input, one or more first modules of function, and at least one first module of task according to the retrieved first metadata.

2. The method of claim 1, comprising:
   building at a server of the AN service provider, the first application based on the first metadata and the first modules.

3. The method of claim 1, comprising:
   transmitting to an AN consumer requesting the first application, the first metadata and the first modules for the AN consumer to build the first application.

4. The method of claim 1, comprising:
   building within virtual resources, the first application based on the first metadata and the first modules, for an AN consumer requesting the first application to access the virtual resources and run the first application within the virtual resources.

5. The method of any of claims 1 to 4, comprising:

   deriving by domain analysis function, a domain tag for the first request, in case the first application involves different domains; and
   retrieving the first metadata comprising the derived domain tag.

6. The method of any of claims 1 to 5, wherein the first metadata comprises at least one of the following:

   a task description,
   a domain tag, or
   a module-based graph comprising the first modules as nodes and directional edges indicating connection between the first modules.

7. The method of any of claims 1 to 6, comprising:
   retrieving the first metadata, the first modules of input, the first modules of function and the first module of task from corresponding databases.

8. The method of any of claims 1 to 6, comprising:
   retrieving at least one of the first metadata, the first modules of input, the first modules of function and the first module of task from another AN service provider.

9. The method of claim 8, comprising:
   retrieving the at least one from the another AN service provider in at least one case of the following:

   the at least one retrieved from the another AN service provider outperforms the corresponding one retrieved from a local database, or
   the one corresponding to the at least one retrieved from the another AN service provider is absent in the local database.

10. The method of any of claims 1 to 9, comprising:

updating the first application by updating the first modules.

11. The method of any of claims 1 to 10, comprising:

    receiving a second request for a second application;
    retrieving by the metadata retrieval function, second metadata for the second application;
    retrieving by the module retrieval function, one or more second modules of input, one or more second modules of function, and at least one second module of task according to the retrieved second metadata; and
    determining by coordination trigger function, whether to trigger a coordination adapter based on detecting coordination between the first application and the second application.

12. The method of claim 11, comprising:
    in case of determining not to trigger the coordination adapter, building the second application based on the second metadata and the second modules.

13. The method of claim 11, comprising:
    in case of determining to trigger the coordination adapter,

    retrieving by coordinator metadata retrieval function, coordinator metadata for the coordination,
    retrieving by adapter retrieval function, an adapter, and joint output layers according to the retrieved coordinator metadata, and
    building a coordinated application by merging the first modules and the second modules, composing the merged modules with the adapter, and stacking the composed modules and adapter with the joint output layers.

14. The method of claim 13, wherein the coordinator metadata comprises at least one of the following:

    a coordinator description,
    a domain tag,
    the adapter, or
    the joint output layers.

15. The method of claim 13 or 14, comprising:
    updating the coordinated application by updating at least one of the following: the adapter or the joint output layers.

16. An apparatus for an autonomous network, AN, service provider, comprising means for performing steps of the method of any of claims 1 to 15.

| App 1 MLB | App 2 MRO | App 3 Slicing coverage optimization |
|---|---|---|

## AN kernels

### Task/Aggregator modules

| Resource opt. params | Mobility opt. params | 5QI opt. params |
|---|---|---|

| Antenna/beamforming opt. params | Power opt. params | ...... |
|---|---|---|

### Function modules

| Throughput anomaly classifier | Handover anomaly classifier | Overload detector |
|---|---|---|

| Throughput & latency predictor | Handover predictor | Load predictor | ...... |
|---|---|---|---|

### Input modules

| Throughput & latency KPIs | Load & resource KPIs | Traffic & users KPIs |
|---|---|---|

| Mobility KPIs | Resource params | Mobility params | 5QI params | ...... |
|---|---|---|---|---|

FIG. 1

MRO app

Task/Aggregator modules

Function modules

Input modules

Handover parameters

Handover predictor

Handover anomaly classifier

Throughput anomaly classifier

Mobility params

Mobility KPIs

Traffic & users KPIs

Load & resource KPIs

Throughput & latency KPIs

FIG. 2

FIG. 3

FIG. 4

| AN consumer 510 | | AN service provider 520 |
|---|---|---|

First request 515

525: Retrieving first metadata

530: Retrieving first modules

535: Building first application

540 First application X

545 First metadata and first modules

550: Building first application

555 Building first application

Accessing and running | Virtual resources

560

FIG. 5

| AN consumer 610 | AN consumer 620 | AN service provider 520 |
|---|---|---|

First request 615

First request 625

Data request 630

Data request 635

Data 640

Data 645

650: Deriving domain tags

655: Retrieving first metadata

660: Retrieving first modules

665: Building first applications

670

First application X1

675

First application X2

FIG. 6

FIG. 7A

FIG. 7B

FIG. 8

| AN consumer 510 | | AN service provider 520 |
|---|---|---|

First request 515

525: Retrieving first metadata

530: Retrieving first modules

535: Building first application

540 — First application X

Second request 915

920: Retrieving second metadata

925: Retrieving second modules

930 —

No — Whether to trigger coordination adapter?

935: Building second application | Yes

940 — Second application Y

945: Retrieving coordinator metadata

950: Retrieving adapter and joint output layers

955: Building coordinated application

960 — Coordinated application XY

FIG. 9

1000

1010

Receiving first request for first application

1020

Retrieving first metadata for first application

1030

Retrieving first modules according to first metadata

FIG. 10

1100

1110

Processor

1120

Memory

Instructions

1130

FIG. 11

1200

1210

1220

1230

FIG. 12

Europäisches
Patentamt
European
Patent Office
Office européen
des brevets

# EUROPEAN SEARCH REPORT

**Application Number**

**EP 25 17 7113**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/258181 A1 (NOKIA SOLUTIONS & NETWORKS OY [FI]) 15 December 2022 (2022-12-15) * the whole document * | 1-16 | INV. H04L41/0806 H04L41/0853 H04L41/0895 H04L41/40 |
| X | SZILÁGYI PÉTER: "I2BN: Intelligent Intent Based Networks", JOURNAL OF ICT STANDARDISATION, 8 June 2021 (2021-06-08), XP055893022, DK ISSN: 2245-800X, DOI: 10.13052/jicts2245-800X.926 Retrieved from the Internet: URL:https://journals.riverpublishers.com/index.php/JICTS/article/download/6301/5777 * the whole document * | 1-16 | H04L69/32 |

**TECHNICAL FIELDS SEARCHED (IPC)**

H04L

The present search report has been drawn up for all claims

| Place of search | Date of completion of the search | Examiner |
|---|---|---|
| Munich | 11 September 2025 | García Bolós, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 7113

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2025

| Patent document cited in search report | Publication date | Patent family member(s) | Publication date |
|---|---|---|---|
| WO 2022258181 A1 | 15-12-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TIANLUN HU** ; **QI LIAO** ; **QIANG LIU** ; **GEORG CARLE**. Network Slicing via Transfer Learning aided Distributed Deep Reinforcement Learning. *IEEE GLOBECOM*, 2022